# EUROPEAN PATENT SPECIFICATION

(11) **EP 0 386 613 B1**
(45) Date of publication and mention of the grant of the patent: **17.05.1995**
(21) Application number: 90103940.4
(22) Date of filing: 01.03.1990
(51) Int. Cl.: F16K 21/06, F16K 11/065, F16K 47/02, F16K 31/60

(54) **A mixing valve with means for slowing down the closing action**
Verzögert schliessendes Mischventil
Robinet mélangeur à fermeture retardée

(30) Priority: 09.03.1989 FI 891142
(43) Date of publication of application: 12.09.1990
(73) Proprietor: ORAS OY, 26100 Rauma10 (FI)
(72) Inventor: Koppanen, Jorma Tapani, SF-26660 Rauma (FI); Nilsson, Pekka, SF-26100 Rauma (FI)
(74) Representative: UEXKÜLL & STOLBERG

(56) References cited:
- DE-A- 3 246 350
- DE-A- 3 531 932
- DE-A- 3 534 692
- DE-U- 8 815 276

## Description

The present invention relates to a mixing valve having means for slowing down the closing action, comprising a valve body, a ceramic plate fixed to the regulating element of the body, the plate having through inlets for hot and cold water on one hand, and a through discharge outlet for mixed water on the other hand, a mobile ceramic plate, having an opening cooperating with those of the fixed plate for the regulation of cold an hot water flows, and forming per se or together with a connected plastic piece a water flow space, and a spindle cooperating with the mobile ceramic plate, which is rotatingly articulated on a limiter. Such mixing valves are known as so-called lever faucets, in which the water temperature as well as the water amount are regulated by means of a single lever.

A rapid closing of the lever faucet causes a pressure shock in the pipework, which makes a disturbing noise and may cause a sudden temperature variation of another cock in close proximity.

There has been constructions to dampen the pressure shock, in which the regulating element of the cock has been provided with a small cylinder with a piston, which lets in water when the cock is being opened, and during the closing motion, the piston in the cylinder expels the water through a small outlet in the cylinder, thus delaying the closing action.

This system has the drawback of small and wearing joints and of lime being deposited in the cylinder, thus affecting the tightness of the space between the piston and the cylinder. When the joints are out of order the cock begins to leak.

It is also known (DE-U-8 815 276) to provide means for slowing down the closing action in the spindle at the limiter and separate from the flow space. Such means comprise a bolt extending through a transverse bore in the spindle and coming into engagement with a conical surface of the limiter in certain positions of the spindle. In such positions the bolt slows down the closing action due to engagement with friction means which are provided in the spindle and reduce the movability of the pin.

The purpose of the present invention is to provide a mixing valve that is separated from the water flow space and is equipped with means to slow down the closing action which means do not come into contact with the water and result in a reliable operation.

In order to achieve this purpose the invention provides for a mixing valve, comprising a valve body, a ceramic plate fixed to the regulating part of the body, the plate having inlets for hot and cold water on the one hand and a through discharge outlet for mixed water on the other hand, a mobile ceramic plate having an opening with the openings in the solid plates for the regulation of cold and hot water flows and forming per se or together with a plastic piece a water flow space, a spindle, co-operating with the mobile ceramic plate, which is rotatingly articulated on a limiter, and means for slowing down the closing action which means are formed in the spindle at the limiter and are separated from the flow space which mixing valve is characterized in that the means for slowing down the closing action comprise a piston placed in a cylindrical through opening of the spindle, the piston ends being supported by a curved support surface formed on the inner surface of the limiter.

The means for slowing down the closing action according to the invention do not thus get into contact with water, so that there is no risk of lime being deposited on the surfaces of the device. The device being positioned immediately next to the limiter in the upper portion of the cock makes service easy. The device prevents a sudden closing of the valve and thus reduces pressure caused by the closing motion in the pipework.

The invention is described in greater detail below with reference to the enclosed drawings, in which
Figure 1 shows a cross-section of the mixing valve of the invention at the body portion,
Figure 2 shows a cross-section on a slightly enlarged scale of an air-operated delay means for the closing action,
Figure 3 shows a medium-operated delay means for the closing action, having a closed cylinder.

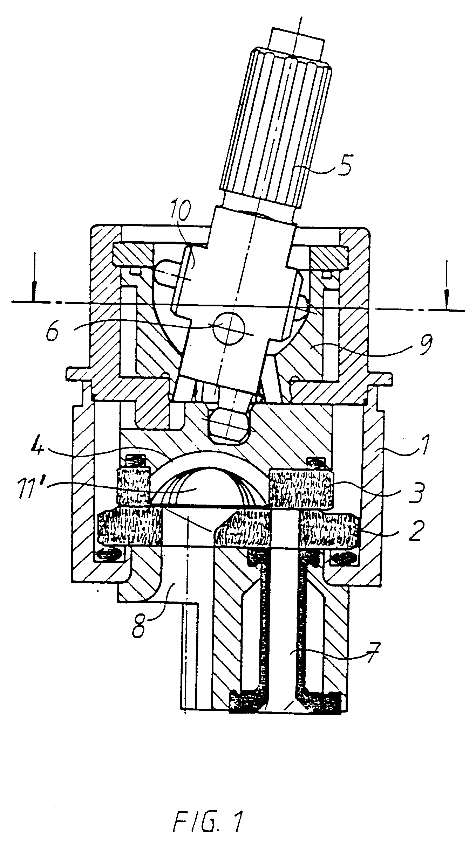

In Figure 1 the body of the mixing valve or cock is indicated with reference numeral 1. The actual mixing member has been placed inside the body, comprising a fixed ceramic plate 2, among others, having cold and hot water inlets 7 as well as a mixed water discharge outlet 8. For the regulation of the mixing ratio and the total amount of water a mobile ceramic disc 3 is provided, to which a plastic piece 4 has been tightly fitted, forming together with the ceramic plate 3 the water flow and mixing space 11′ in a manner known per se. The mixed water discharged through the outlet 8 eventually reaches the drain pipe, which is not represented for the sake of clarity of the Figure.

The plate combination 3,4 is actuated by the turning spindle 5, which is articulated e.g. with a pin 6 on the rotating limiter 9. The actual regulating lever, which is not shown in the Figure, is attached to the upper end of the spindle 5.

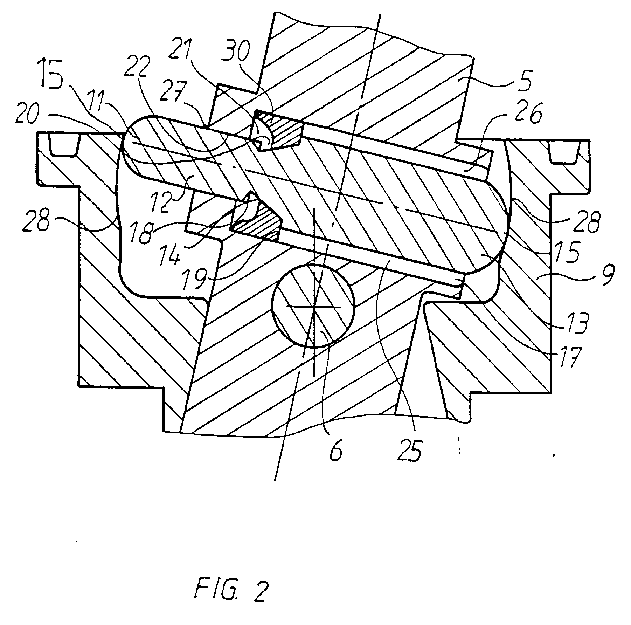

As is shown in Figure 2, a cylindrical through opening 25 is provided above the pin 6 in the spindle 5, a piston 11 having been placed in the opening. The opening 25 consists of two parts 26 and 27, the shorter part 27 having a smaller diameter acting as a guide opening for the shorter part of the piston 11, the axis. The motion of the piston 11 is guided by the limiter 9 disposed at the upper part of the body portion 1, which in ordinary solutions has the design of a piece that has a conical inside and a plane surface.

In the solution of the invention the inner surface of the limiter 9 is curved. The surface forms a support and guide surface for the piston 11 as it moves in the opening 25. The ends 15 of the piston glide along the surface 28 when the cock is being opened and closed. The guide surface has been designed so as to allow the motion of the piston when the cross-sections of the surfaces form a curve of a circle, the diameter of which is the length of the piston. Below the pin 6 the limiter 9 has an ordinary design.

In the air-operated delay element for the closing motion of Figure 2 a partly conical gasket ring 30 has been disposed around the piston 11. The piston 11 consists of two parts 12 and 13, part 12 being narrower and shorter and acting as an axis of the piston. The parts are separated by an annular groove 16, which is defined by a sharp edge 18 and a shoulder 19 as well as the conical surface 14 of the piston between these two.

When the cock is being opened, the piston 11 moves in the opening 25 of the spindle 5 (to the right in the Figure), whereby the conical surfaces of the piston 11 and the gasket 30 are separated. A slot is formed between the surfaces, letting in air along grooves 17 formed in the piston 11 to the other side of the gasket 30 into the space 21 at the bottom of the broader part of the cylindrical opening 25, the so-called pressure side.

The piston 11 having moved over the play 20, the sharp edge 18 of the piston touches the gasket 30 and brings this along as the opening motion is continued. The cock having been opened into a fully open position, the piston having continued its motion over another play 20, the piston 11 with its gasket 30 has also moved into its extreme position, and the volume of the pressure side 21 is then at its maximum.

When the cock is being closed again, the piston 11 starts moving in the opening 25 in the opposite direction with regard to the opening motion, and the gasket 30 is detached from the edge 18. When the piston 11 has moved over another play 20, the cones of the piston and the gasket as well as the shoulder 19 meet, the piston 11 and gasket 30 being sealed to each other and the inlet passage for air is closed.

When the closing motion of the cock is continued, a pressure arises in the space 21, which is discharged only through the play 22 between the piston axis 12 and the guide opening 27 of the opening 25. By choosing an adequate play 22 the closing motion of the cock is regulated so that no disturbing pressure shock is produced in the pipework when the cock is being closed.

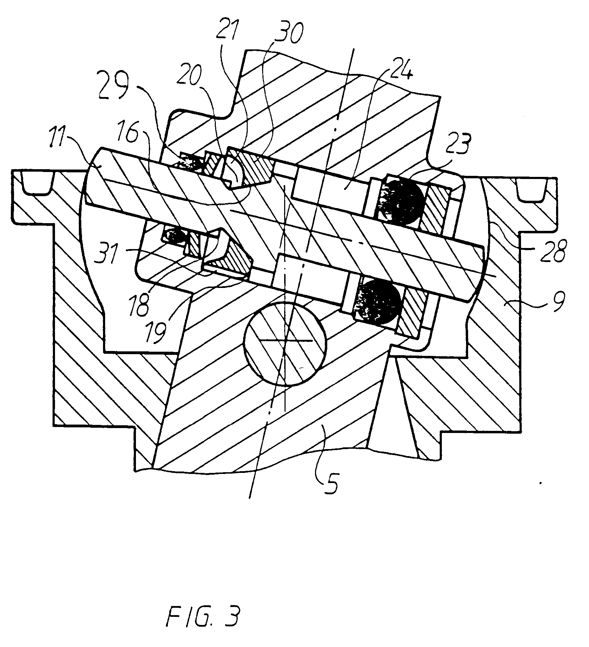

Figure 3 shows a delay means for the closing action operating with a liquid or some other medium, and having a closed cylinder. This operating manner is in principle the same as the operation of the air-operated delay means described above.

The cylindrical opening 25 is closed outwards with gaskets like O-rings 23, 29, in order to provide a closed space 24 and a medium has been introduced in the space 24, such as e.g. oil, vaseline or some other grease or even gas. When the cock is opened the medium can pass through the opening formed by the gasket 30 and the cone 14 of the piston from the container part of the space 24 to the pressure side 21. When the cock is being closed and the conical surfaces are opposite to each other, the medium can pass to the openings 31 formed on the outer circumference of the gasket 30 back to the container part at an appropriate rate determined by the size of the openings 31 of the gasket 30.

The embodiments described above can naturally vary within the limits of the invention as defined in the following claims.

## Claims

1. A mixing valve, comprising a valve body (1), a ceramic plate (2) fixed to the regulating part of the body, the plate having inlets (7) for hot and cold water on the one hand and a through discharge outlet (8) for mixed water on the other hand, a mobile ceramic plate (3) having an opening co-operating with the openings in the solid plates (2) for the regulation of cold and hot water flows and forming per se or together with a plastic piece (4) a water flow space (11′), a spindle (5), co-operating with the mobile ceramic plate (3), which is rotatingly articulated on a limiter (9), and means (10) for slowing down the closing action which means (10) are formed in the spindle (5) at the limiter (9) and separated from the flow space (11′) characterized in that the means (10) for slowing down the closing action (10) comprise a piston (11) placed in a cylindrical through opening (25) of the spindle (5), the piston ends (12, 13) being supported by a curved support surface (28) formed on the inner surface of the limiter (9).

2. A mixing cock according to claim 1, **characterized** in that the piston (11) consists of a pin-like part forming a narrower end (12) and a pin-like part forming a broader end (13), and in that an annular groove (16) has been formed at the point of union of the pin-like parts, the groove being defined by a sharp edge (18), a shoulder (19) and the conical surface (14) of the piston between these two, and in that a conical gasket (30) corresponding to the conical surface (14) of the piston has been placed in the groove (16) so as to leave a play (20) between the gasket (30) and the edge (18) or the gasket (30) and the shoulder (19).

3. A mixing valve according to claim 2, **characterized** in that the through opening (25) formed in the spindle (5) consists of two parts, one of the parts (26) having a diametre that is greater or slightly greater than the broader end (13) of the piston (11) and the other part (27) having a diameter that is equal or slightly greater than the narrower end (12) of the piston and in that the conical surface (14) of the piston and the conical gasket (30) define a space (21) at the bottom of the broader part of the opening (25), where pressure arises.

4. A mixing valve according to claim 3, **characterized** in that longitudinal grooves (17) have been formed at the broader end of the piston in order to let in air in the space (21), and in that a play (22) has been formed in the opening (25) at the narrower end of the piston, through which play the pressure can be discharged.

5. A mixing valve according to claim 3, **characterized** in that the opening (25) in which the piston is placed, is closed by gaskets (23, 29) e.g. O-rings in order to provide a closed space (24) in the opening (25) and in that a medium such as oil or gas has been introduced in the space (24), and in that through grooves (31) have been formed in the conical gasket (30) in order to provide flow openings for the medium.

## Patentansprüche

1. Mischventil, mit einem Ventilkörper (1), einer Keramikplatte (2), die am Regulierglied des Körpers befestigt ist, wobei die Platte einerseits Zuläufe (7) für warmes und kaltes Wasser und andererseits einen Durchgangsablauf (8) für Mischwasser enthält, mit einer beweglichen Keramikplatte (3), die eine Öffnung aufweist, die mit den Öffnungen in den festen Platten (2) zusammenwirkt, um den Durchfluß des kalten und des warmen Wassers zu regulieren, und die per se oder zusammen mit einem Kunststoffteil (4) einen Wasserdurchflußraum (11′) bildet, mit einer Spindel (5), die mit der beweglichen Keramikplatte (3) zusammenwirkt, welche drehbar gelenkig an einem Begrenzer (9) angebracht ist, und mit Einrichtungen (10), um den Schließvorgang zu verzögern, wobei die Einrichtungen (10) in der Spindel (5) am Begrenzer (9) ausgebildet und vom Durchflußraum (11′) getrennt sind, **dadurch gekennzeichnet,** daß die Einrichtungen (10) zum Verzögern des Schließvorgangs (10) einen Kolben (11) enthalten, der in einer zylindrischen Durchgangsöffnung (25) der Spindel (5) angeordnet ist, wobei die Enden (12, 13) des Kolbens durch eine gekrümmte Haltefläche (28) gehalten werden, die auf der Innenfläche des Begrenzers (9) ausgebildet ist.

2. Mischventil nach Anspruch 1, **dadurch gekennzeichnet,** daß der Kolben (11) einen stiftförmigen Abschnitt, der ein dünneres Ende (12) bildet, und einen stiftähnlichen Abschnitt aufweist, der ein dickeres Ende (13) bildet, und daß eine ringförmige Vertiefung (16) an der Verbindungsstelle der stiftförmigen Abschnitte ausgebildet ist, wobei die Vertiefung durch eine scharfe Kante (18), eine Schulter (19) und eine zwischen diesen beiden liegende konische Fläche (14) des Kolbens gebildet ist, und daß eine konische Dichtung (30), die der konischen Fläche (14) des Kolbens entspricht, in der Vertiefung (16) so angeordnet ist, um ein Spiel (20) zwischen der Dichtung (30) und der Kante (18) oder der Dichtung (30) und der Schulter (19) zu bilden.

3. Mischventil nach Anspruch 2, **dadurch gekennzeichnet,** daß die Durchgangsöffnung (25), die in der Spindel (5) ausgebildet ist, zwei Abschnitte aufweist, wobei einer der Abschnitte (26) einen Durchmesser hat, der größer oder etwas größer ist als das dickere Ende (13) des Kolbens (11), und wobei der andere Abschnitt (27) einen Durchmesser hat, der gleich oder etwas größer ist als das dünnere Ende (12) des Kolbens, und daß die konische Fläche (14) des Kolbens und die konische Dichtung (30) am Unterteil des dickeren Abschnittes der Öffnung (25) einen Raum (21) bilden, in dem Druck entsteht.

4. Mischventil nach Anspruch 3, **dadurch gekennzeichnet,** daß am dickeren Ende des Kolbens längliche Vertiefungen (17) ausgebildet sind, um Luft in den Raum (21) einströmen zu lassen, und daß in der Öffnung (25) am dünneren Ende des Kolbens ein Spiel (22) ausgebildet ist, wobei der Druck durch das Spiel abgebaut werden kann.

5. Mischventil nach Anspruch 3, **dadurch gekennzeichnet,** daß die Öffnung (25), in welcher der Kolben angeordnet ist, durch Dichtungen (23, 29), beispielsweise O-Ringe, geschlossen ist, um in der Öffnung (25) einen geschlossenen Raum (24) zu bilden, und daß ein Mittel, wie Öl oder Gas, in den Raum (24) eingebracht wird, und daß in der konischen Dichtung (30) Durchgangsvertiefungen (31) ausgebildet sind, um für das Mittel Durchflußöffnungen vorzusehen.

## Revendications

1. Robinet mélangeur comprenant un corps de robinet (1), une plaque en céramique (2) fixée à la partie de réglage du corps, cette plaque comportant des passages d'entrée (7) d'eau chaude et d'eau froide d'une part et un passage de sortie de décharge (8) d'eau mélangée d'autre part, une plaque en céramique mobile (3) munie d'une ouverture coopérant avec les ouvertures de la plaque fixe (2) pour le réglage des débits d'eau froide et d'eau chaude, cette plaque mobile formant elle-même ou avec une pièce en matière plastique (4) un espace d'écoulement d'eau (11′), une broche (5) coopérant avec la plaque en céramique mobile (3), cette broche étant articulée en rotation sur un limiteur (9), et des moyens (10) pour ralentir l'action de fermeture, ces moyens (10) étant formés dans la broche (5) à l'endroit du limiteur (9) et séparés de l'espace d'écoulement (11′), robinet mélangeur caractérisé en ce que les moyens (10 ) de ralentissement de l'action de fermeture comprennent un piston (11) placé dans une ouverture de passage cylindrique (25) de la broche (5), les extrémités (12, 13) du piston étant supportées par une surface de support courbe (28) formée sur la surface intérieure du limiteur (9).

2. Robinet mélangeur selon la revendication 1, caractérisé en ce que le piston (11) consiste en une partie en forme de tige formant une extrémité plus étroite (12) et une partie en forme de tige formant une extrémité plus large (13), une rainure annulaire (16) a été formée au point de jonction des parties en forme de tiges, cette rainure étant définie par un bord raide (18), un épaulement (19) et la surface conique (14) du piston entre les deux, et en ce qu'un joint d'étanchéité conique (30) correspondant à la surface conique (14) du piston a été placé dans la rainure (16) de manière à laisser un jeu (20) entre le joint d'étanchéité (30) et le bord (18) ou entre le joint d'étanchéité (30) et l'épaulement (19).

3. Robinet mélangeur selon la revendication 2, caractérisé en ce que l'ouverture de passage (25) formée dans la broche (5) est constituée de deux parties, l'une (26) de ces parties présentant un diamètre supérieur ou légèrement supérieur à celui de l'extrémité plus large (13) du piston (11), tandis que l'autre partie (27) présente un diamètre égal ou légèrement supérieur à celui de l'extrémité plus étroite (12) du piston, et en ce que la surface conique (14) du piston et le joint d'étanchéité conique (30) définissent un espace (21) au fond de la partie plus large de l'ouverture (25), espace dans lequel se forme la pression.

4. Robinet mélangeur selon la revendication 3, caractérisé en ce que des rainures longitudinales (17) ont été formées à l'extrémité plus large du piston pour laisser entrer de l'air dans l'espace (21), et en ce qu'un jeu (22) a été formé dans l'ouverture (25) à l'extrémité plus étroite du piston, jeu par lequel la pression peut être déchargée.

5. Robinet mélangeur selon la revendication 3, caractérisé en ce que l'ouverture (25) dans laquelle on place le piston, est fermée par des joints d'étanchéité (23, 29) tels que par exemple des joints toriques, de manière à former un espace fermé (24) dans l'ouverture (25), en ce qu'on introduit un agent de commande tel que de l'huile ou du gaz dans l'espace (24), et en ce que des rainures de passage (31) ont été formées dans le joint d'étanchéité conique (30) pour former des ouvertures d'écoulement de l'agent de commande.
